# EUROPEAN PATENT APPLICATION

(11) **EP 2 045 294 A1**
(43) Date of publication of application: **08.04.2009**
(21) Application number: 06832834.3
(22) Date of filing: 17.11.2006
(51) Int. Cl.: C08L 69/00, B32B 27/36, C08K 5/42, C08K 5/49, C08L 67/04, G02B 5/02

(54) **LIGHT DIFFUSING POLYCARBONATE RESIN PLATE**

(30) Priority: 24.07.2006 JP 2006200231
(71) Applicant: Sumitomo Dow Limited, Tokyo 103-0026 (JP)
(72) Inventor: NUKUI, Shinji, Osaka-shi Osaka 554-8558 (JP); KAWAGOSHI, Akihito, Osaka-shi Osaka 554-8558 (JP)
(74) Representative: Dossmann, Gérard
(86) International application number: PCT/JP2006/322955
(87) International publication number: WO 2008/012929

(57) **Abstract**

The present invention presents a light diffusing polycarbonate resin sheet obtained by coextruding a polycarbonate resin composition containing an antistatic agent as an essential component as a surface layer on at least one side of a base material comprising a polycarbonate resin composition containing a light diffusing agent as an essential component, wherein the antistatic agent of said surface layer is a specified organic sulfonic acid phosphonium salt and the concentration of said antistatic agent exceeds 2.0 parts by weight but is 10 parts by weight or less per 100 parts by weight of a polycarbonate resin used in the surface layer, and, when desired, polycaprolactone is present in 0.01 to 15 parts by weight per 100 parts by weight of the polycarbonate resin used in the surface layer.

The light diffusing polycarbonate resin sheet of the present invention has excellent antistatic properties, light diffusion properties and luminance without adversely affecting the clarity of the polycarbonate resin and is ideal for use in light diffusing sheets particularly in those used in liquid crystal display device back lighting.

## Description

### Field of the Invention

This invention relates to a light diffusing polycarbonate resin sheet obtained by extruding a polycarbonate resin containing an antistatic agent of a specific structure and, when desired, polycaprolactone as a surface layer on a base material comprising a polycarbonate resin with light diffusing properties.

### Prior Art

Polycarbonate resins are used in a broad range of applications as resins with excellent light transmittance since they also have excellent mechanical properties, heat resistance and photoresistance. Large quantities of the resin are used in the construction area, for example, in sky domes, sky lights, arcades, baseboards in condominiums and wallboards facing roadways. The resin is used in the form of milky white, light diffusing sheets in may of these applications, and a method to blend light diffusing agents such as calcium carbonate, barium sulfate, silicon oxide, titanium oxide and the like into a polycarbonate resin (Reference 1) and a method to disperse fine particles (Reference 2) have been proposed.

Reference 1:Publication of examined Japanese Patent Application No. 57-24186
Reference 2:Japanese Patent Application Public Disclosure No. 05-257002

Such light diffusing polycarbonate resin sheets are used in an edge lighting mode in liquid crystal displays, in planar light sources for a direct downward backlighting mode and in scanner planar light sources.

The light diffusing sheets described in References 1 and 2 described above involved a light diffusing material with a minimum performance. When the material was actually incorporated into a planar light source, dust adhesion was a problem and caused uneven displays on liquid crystal screens as the environment in which it was used changed. Therefore, an antistatic function was sought.

A commonly used method to impart antistatic performance to a polycarbonate resin is to add electroconductive carbon black or carbon fiber. However, these additives are black and are not easily adaptable to optical applications such as light diffusing sheets. In addition, alkane sulfonic acid metal salts, alkylbenzene sulfonic acid salts and the like are commonly used as antistatic agents in applications other than black products. However, when these antistatic agents are added to a polycarbonate resin, the material becomes white and opaque. This is a problem with planar light sources since high luminance can not be achieved due to insufficient light transmittance.

### Problems to be solved by the Invention

The objective of the present invention is to obtain a light diffusing polycarbonate resin sheet with excellent antistatic properties without adversely affecting luminance when incorporated into a planar light source.

### Means to solve the Problems

The inventors conducted an extensive study to solve the problems described above. As a result, the inventors discovered that a light diffusing polycarbonate resin sheet with excellent antistatic properties was obtained by coextruding a polycarbonate resin layer containing an antistatic agent of a specific structure and a polycaprolactone when desired on at least one side of a base material comprising a light diffusing polycarbonate resin, and the present invention was completed.

That is, the present invention is a light diffusing polycarbonate resin sheet obtained by coextruding a polycarbonate resin composition containing an antistatic agent as a surface layer on at least one side of a base material comprising a polycarbonate resin composition containing a light diffusing agent, wherein said antistatic agent is an organic sulfonic acid phosphonium salt represented by the chemical formula 1 below 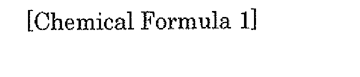 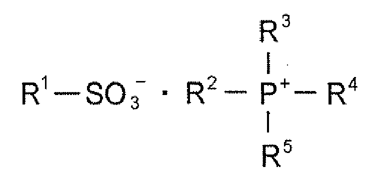 , wherein R¹ is an alkyl group, an aryl group or an aryl group containing alkyl groups as a substituent, and R² to R⁵ are, identical or different, hydrogen atoms, alkyl groups or aryl groups,
and the content of said antistatic agent exceeds 2.0 parts by weight but no more than 10 parts by weight per 100 parts by weight of the polycarbonate resin used in the surface layer.

### Advantages of the Invention

The light diffusing polycarbonate resin sheet of the present invention has excellent antistatic properties and luminance without an adverse effect on the polycarbonate resin clarity and is ideal for use in the applications where a high degree of optical performance is needed, particularly in light diffusing sheets used in backlighting in liquid crystal display devices.

### Brief description of the drawings

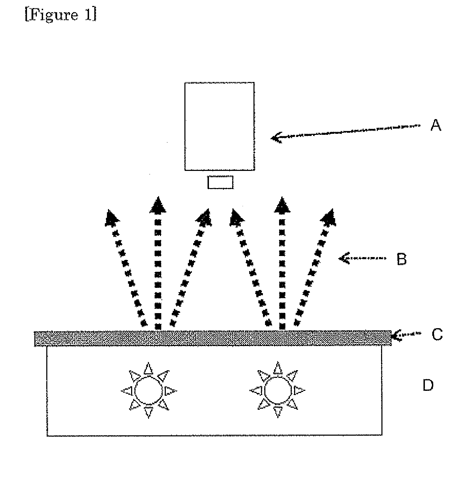

Figure 1 shows a measurement method for the luminance between lamps in the present invention. A: Luminance meter; B: Light beam from the lamp; C: Light diffusion sheet; D: Lamp (cold anode tube)

### Detailed Description of the Invention

The polycarbonate resin used in the base material and the surface layer in the present invention is a polymer obtained using a phosgene method wherein various dihydroxy diaryl compounds are allowed to react with phosgene or using an ester exchange method wherein a dihydroxy diaryl compound and a carboxylic acid ester such as diphenyl carbonate and the like are allowed to react. Polycarbonate resins produced using 2,2-bis(4-hydroxyphenyl) propane (bisphenol A) may be cited as a typical example.

As the dihydroxy diaryl compound described above, bis(hydroxyaryl) alkanes such as bis(4-hydroxyphenyl) methane, 1,1-bis(4-hydroxyphenyl) ethane, 2,2-bis(4-hydroxyphenyl) butane, 2,2-bis(4-hydroxyphenyl) octane, bis(4-hydroxyphenyl) phenyl methane, 2,2-bis(4-hydroxyphenyl-3-methylphenyl) propane, 1,1-bis(4-hydroxy-3-tertiary-butylphenyl) propane, 2,2-bis(4-hydroxy-3-bromophenyl) propane, 2,2-bis(4-hydroxy-3,5-dibromophenyl) propane and 2,2-bis(4-hydroxy-3,5-dieblorophenyl) propane; bis(hydroxyaryl) cycloalkanes such as 1,1-bis(4-hydroxyphenyl) cyclopentane and 1,1-bis(4-hydroxyphenyl) cyclohexane; dihydroxy diaryl ethers such as 4,4'-dihydroxy diphenyl ether and 4,4'-dihydroxy-3,3'-dimethyldiphenyl ether; dihydroxy diaryl sulfides such as 4,4'-dihydroxy diphenyl sulfide; dihydroxy diaryl sulfoxides such as 4,4'-dihydroxy diphenyl sulfoxide and 4,4'-dihydroxy-3,3'-dimethyl diphenyl sulfoxide and dihydroxy diaryl sulfones such as 4,4'-dihydroxy diphenyl sulfone and 4,4'-dihydroxy-3,3'-dimethyl diphenyl sulfone and the like may be cited in addition to bisphenol A. They may be used individually or as a mixture of at least two types. In addition to these Examples, piperazine, dipiperidyl hydroquinone, resorcinol, 4,4'-dihydroxydiphenyl and the like may be mixed and used.

Furthermore, the dihydroxyaryl compounds described above and phenol compounds with at least three valences shown below may be mixed and used. As the phenol with at least three valences, fluoroglucine, 4,6-dimethyl-2,4,6-tri-(4-hydroxyphenyl)-heptane, 2,4,6-dimethyl-2,4,6-tri-(4-hydroxyphenyl)-beptane, 1,3,5-tri-(4-hydroxyphenyl)-benzol, 1,1,1-tri-(4-hydroxyphenyl)-ethane and 2,2-bis-[4,4-(4,4'-dihydroxydiphenyl)-cyclohexyl]-propane and the like may be cited.

The viscosity average molecular weight of the polycarbonate resin used in the surface layer or base material is ordinarily 10,000 to 100,000, but 15,000 to 35,000 is preferred and 17,000 to 28,000 is more preferred. When producing such a polycarbonate resin, a molecular weight adjusting agent, a catalyst and the like may be used as needed.

The light diffusing agent used in the present invention is not particularly restricted as far as the chemical composition is concerned to polymeric systems and inorganic systems. However, the agent needs to be present in the form of particles that are insoluble or slightly soluble in the matrix phase when a light diffusing agent is added to a polycarbonate resin component of the present invention and is dispersed using a well known method such as melting and mixing in an extruder.

As specific examples of the light diffusing agent, inorganic diffusion agents such as calcium carbonate, silica, silicone, zinc sulfide, zinc oxide, titanium oxide, titanium phosphate, magnesium titanate, magnesium titanate [sic], mica, glass filler, barium sulfate, clay, talc, silicone rubber-like elastomers, polymethyl silses oxane and the like and organic diffusion agents such as acrylic, styrenic, polyester type, polyolefin type, urethane type, nylon type, methacrylate styrene type, fluorine type, norbornene type and the like agents may be cited. Silica, silicone or acrylic agents are exceptionally ideal.

Furthermore, the particle diameter of the light diffusing agent is not particularly restricted as long as the addition of said diffusing agent yields the desired light diffusion property. However, an average particle diameter of about 1 to 30 µm can ideally be used. When the particle diameter is less than 1 µm, the agent simply transmits light and a light diffusing effect is sometimes difficult to obtain. Similarly, when the particle diameter exceeds 30 µm, a sufficient light diffusing effect is not obtained and visual recognition is sometimes poor. In addition, the particle size distribution is not particularly restricted, but may be about 0.1 to 100 µm. Furthermore, the range 1.5 to 25 µm is more ideally used. At least two light diffusing agents with different average particle sizes, particle size distributions and types may be used in combination. Agents with a particle size distribution that is not uniform and have at least two particle size distributions may be used individually or in combination.

The ideal amount of an added light diffusing agent is 0.1 to 10 parts by weight per 100 parts by weight of the polycarbonate resin in the base material. When the amount added is less than 0.1 parts by weight, a sufficient light diffusing effect is sometimes difficult to obtain. Similarly, the light transmittance is adversely affected when the amount exceeds 10 parts by weight, and sufficient light diffusing performance is sometimes not obtained. The range 0.3 to 5 parts by weight is more preferred.

The antistatic agent used in the present invention is an organic sulfonic acid phosphonium salt represented by the chemical formula 1 below.

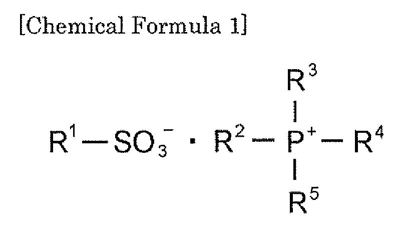

In the formula, R¹ is an alkyl group, an aryl group or an aryl group containing alkyl groups as substituents, but an aryl group or an aryl group containing alkyl groups as substituents is preferred, and an aryl group containing alkyl groups as substituents is more preferred. Here, the number of carbon atoms in the alkyl group and in the alkyl groups used as substituents is 1 to 40, and 8 to 18 is preferred. The number of alkyl groups used as substituents on an aryl group is preferably 1 to 3, but 1 is more preferred. A phenyl group and a naphthyl group can be cited as the aryl group.
Simultaneously, R²-R⁵ represent hydrogen atoms, alkyl groups or aryl groups and may be identical to each other or different. Here, the number of carbons in the alkyl groups is preferably 1 to 10. In addition, a phenyl group may be cited as the aryl group.

An alkylbenzene sulfonic acid phosphonium salt (manufactured by Takemoto Yushi K.K., S-418) represented by the chemical formula 2 shown below is particularly ideal for use among the antistatic agents represented by the chemical formula 1 shown above.

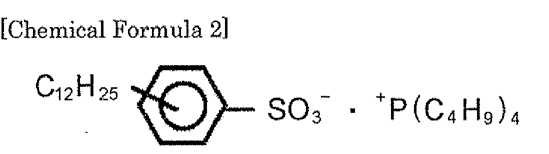

The amount of an antistatic agent used in the surface layer of the present invention is in excess of 2 parts by weight but not more than 10 parts by weight per 100 parts by weight of the polycarbonate resin in the surface layer. When the amount added is 2 parts by weight or less, the antistatic properties are poor. When the amount used exceeds 10 parts by weight, the thermal stability declines making this option unfavorable. The more favorable range is 2.2 to 5 parts by weight.

The polycaprolactone used in the present invention is a polymer manufactured using a ring opening polymerization of ε-caprolactone in the presence of a catalyst, and a homopolymer of 2-oxepanone is ideal for use. Said polymer is readily available commercially, and Tone polymer manufactured by Dow Chemical, CAPA manufactured by Solvay and the like may be used. The viscosity average molecular weight of the polycaprolactone 10,000 to 100,000 is ideal, but 40,000 to 90,000 is even more preferred.

Furthermore, the polycaprolactone also includes modified polycaprolactones obtained by having 1,4-butane diol and the like copresent when ε-caprolactone is subjected to a ring opening polymerization, modified polycaprolactones obtained by substituting molecular termini with ether or ester groups and the like. By using such a polycaprolactone along with an antistatic agent, a synergistic antistatic effect is realized although the mechanism of the synergistic effect is unclear, and an additional excellent effect that the clarity does not decline is realized.

The amount of polycaprolactone added is 0.01 to 15 parts by weight per 100 parts by weight of the polycarbonate resin in the surface layer. When the amount added is less than 0.01 weight part, a sufficient antistatic synergistic effect is not obtained making this option unfavorable. Similarly, when the amount added exceeds 15 parts by weight, the clarity declines making this option unfavorable. A more preferred composition ratio is 0.1 to 7 parts by weight.

Various well known additives, polymers and the like may be added to the base material and/or the surface layer as needed depending upon performance properties other than the light diffusing property demanded in actual situations of the light diffusing polycarbonate resin sheet of the present invention. For example, a hindered amine type photoresistance stabilizing agent may be added to suppress discoloration in a molded resin product when it is exposed to light for an extended period of time. Furthermore, a benzooxazole type fluorescent whitening agent may be added, and the additives may be added in combination.

Well known additives other than those listed above, for example, phenol type or phosphorus type thermal stabilizing agents [2,6-di-t-butyl-4-methylphenol, 2-(1-methylcyclohexyl)-4,6-dimethylphenol, 4,4'-thiobis-(6-t-butyl-3-methylphenol), 2,2-methylene bis-(4-ethyl-6-t-methylphenol), n-octadecyl-3-(3,5-di-t-butyl-4-hydroxyphenyl) propionate, tris(2,4-di-t-butylphenyl) phosphite, 4,4'-biphenylene diphosphinic acid tetrakis-(2,4-di-t-butylphenyl) and the like], lubricants [paraffin wax, n-butyl stearate, synthetic beeswax, natural beeswax, glycerin monoesters, montanic acid wax, polyethylene wax, pentaerythritol tetrastearate and the like], coloring agents [for example, a dye], fillers [calcium carbonate, clay, silica, glass fibers, glass spheres, glass flakes, carbon fibers, talc, mica, various whiskers and the like], fluidity improving agents, developing agents [epoxidized soy bean oil, fluid paraffin and the like] and, furthermore, other thermoplastic resins and various impact resistance improving agents (rubber reinforcing resins obtained using graft polymerization of a compound such as methacrylate esters, styrene, acrylonitrile and the like on a rubber such as polybutadiene, polyacrylate esters, acrylonitrile and the like may be listed as examples) may be added as needed to the light diffusing polycarbonate resin sheets of the present invention.

Execution modes for the present invention are described below.
A method wherein optional amounts of a light diffusing agent and a polycarbonate resin used in the base material are metered and mixed at once using a tumbler, a ribbon blender, a high speed mixer and the like and the mixture is subsequently melt kneaded using an ordinary monoaxial or diaxial extruder to form pellets, a method wherein individual components are separately metered and added into an extruder from multiple numbers of supply devices to melt and mix them and, furthermore, a method wherein a high concentration of a light diffusing agent is added to a polycarbonate resin, melted and mixed once, formed into pellets to prepare a master batch and said master batch and a polycarbonate resin are subsequently mixed to a desired proportion may be used.
Optional conditions may be selected for the positions at which components are added to an extruder, the extrusion temperature, screw rotation number, supply rate and the like when components are melted and mixed depending on the circumstances, and pellets may be formed. Using this procedure, pellets for the base material may be obtained.
In addition, the pellets for the surface layer may be obtained using the same methods described above by metering optional amounts of an antistatic agent and the polycarbonate resin used in the surface layer.
The pellets for use in the base material and the pellets for use in the surface layer obtained in the manner described are each melted and kneaded in two to three monoaxial or diaxial extruders, and laminated sheets are subsequently obtained by supplying the respective melt kneaded materials to the base material feed block and the surface layer feed block of a coextrusion die.

### Examples

The present invention is further explained below using Examples, but the present invention is not restricted to these Examples. Now the terms "%" and "parts" in the Examples are both weight standards unless specifically otherwise noted.

Now the starting materials used are as follows.

### Polycarbonate resin

Sumitomo Dow K.K., Calibre 200-13 (viscosity average molecular weight: 21,500, henceforth abbreviated to "PC").

### Polycaprolactone

Solvay K.K., CAPA6500C (viscosity average molecular weight: 50,000, henceforth abbreviated to "PCL").

### Light diffusing agent

Nikko Rika K.K., MSP-S020 (polymethyl silses oxane type light diffusing agent, henceforth abbreviated to "LD-1").
Ganz Kasei K.K, GMO449S (acrylic diffusing agent, henceforth abbreviated to "LD-2").

### Antistatic agent

Takemoto Yushi K.K., S-418 (alkylbenzene sulfonic acid phosphonium salt, henceforth abbreviated to "antistatic agent".

The pellets for the base material and the surface layer material were obtained by adding the various starting materials described above to a tumbler in the proportions shown in Tables 1-3 for the base material or surface layer material, dry blending for 10 minutes and subsequently kneading the mixture using a diaxial extruder (manufactured by Nippon Seiko Sha, TEX30α) at a fusion temperature of 260°C.

The pellets obtained for the base material and the surface layer material were each dried for 2 hours at 125°C prior to the subsequent steps.
Previously dried pellets for the base material were added to a base material extruder [manufactured by Tanabe Plastics K.K., VS40 monoaxial extruder (L/D = 32, 40Φ)] and were supplied to a base material feed block in a coextrusion die at 260°C. In addition, previously dried surface layer pellets were simultaneously added to a surface layer extruder [manufactured by PLA Giken Sha, model PEX-25-24 monoaxial extruder (L/D = 24, 25Φ)] and were melt extruded from a surface layer material feed at 260°C to obtain a coextruded sheet.

Various properties of the compositions of this invention and the methods used to measure those properties are explained below.

### 1. Intrinsic surface resistance (Rs):

A coextruded sheet obtained was cut into 90x50x2 mm pieces, and the pieces were conditioned at 23°C and 50% relative humidity for twenty four hours. The surface resistance value was measured using a super insulation meter (manufactured by Shishido Seidenki K.K., SME-8311) at a measurement voltage or 500V and a sampling time of sixty seconds. Samples with a intrinsic surface resistance Rs or less than 1X10¹⁴ passed.

### 2. Half life

A coextruded sheet obtained was cut into 90x50x2 mm pieces, and the half life was measured using a static honest meter model H-0110 manufactured by Shishido K.K. First, 10 KV electrical charge was applied until the resistance voltage of a test piece became constant. The charge was subsequently terminated, and the static voltage decay was observed. The time required for the initial static voltage to decrease by half was defined as the half life. The samples with a half life of 10 seconds or less passed.

### 3. Luminance measurements

Two cold anode tubes were placed on the back side of cut coextruded sheets (90x50x2 mm thick), and the luminance of a test piece surface in the direction perpendicular to the lamps was measured. Now the luminance refers to the ratio of the luminosity in one direction and the luminosity per unit area in a surface perpendicular to the direction. In general, it represents the lightness of a light emitting surface [unit: (cd/m²)]. In addition, as the evaluation standard, those having brightness between lamps of at least 2,500 cd/m² passed (O) and those having less than 2,500 cd/m² failed (X). In addition, the measurement method is roughly diagramed in Figure 1.

**[Table 1]**

| | Examples | | | | | | |
|---|---|---|---|---|---|---|---|
| | 1 | 2 | 3 | 4 | 5 | 6 | 7 |
| Base material PC (parts) | 100 | 100 | 100 | 100 | 100 | 100 | 100 |
| LD-1 (parts) | 0.4 | 0.4 | 0.6 | 0.8 | -- | -- | -- |
| LD-2 (parts) | -- | -- | -- | -- | 1.5 | 3.0 | 2.0 |
| Surface layer PC (parts) | 100 | 100 | 100 | 100 | 100 | 100 | 100 |
| Antistatic agent (parts) | 2.2 | 2.5 | 5.0 | 9.0 | 2.2 | 5.0 | 9.0 |
| Intrinsic surface resistance (Ω) | 4.2x10¹³ | 3.5x10¹³ | 2.2x10¹³ | 1.8x10¹³ | 4.2x10¹³ | 2.8x10¹³ | 1.5x10¹³ |
| Half life (seconds) | 8.8 | 6.3 | 4.5 | 3.8 | 8.5 | 4.6 | 3.5 |
| Brightne ss between lamps (cd/m²) | 2530 | 2560 | 2540 | 2520 | 2520 | 2540 | 2510 |

**[Table 2]**

| | Examples | | | | | |
|---|---|---|---|---|---|---|
| | 8 | 9 | 10 | 11 | 12 | 13 |
| Base material PC (parts) | 100 | 100 | 100 | 100 | 100 | 100 |
| LD-1 (parts) | 0.4 | 0.4 | 0.4 | -- | -- | -- |
| LD-2 (parts) | -- | -- | -- | 3.0 | 3.0 | 3.0 |
| Surface layer PC (parts) | 100 | 100 | 100 | 100 | 100 | 100 |
| Antistatic agent (parts) | 2.5 | 2.5 | 2.5 | 5.0 | 5.0 | 5.0 |
| PCL (parts) | 1.0 | 3.0 | 7.0 | 0.2 | 3.0 | 7.0 |
| Intrinsic surface resistance (Ω) | 5.2x10¹² | 4.8x10¹² | 3.3x10¹² | 3.5x10¹² | 2.7x10¹² | 2.5x10¹² |
| Half life (seconds) | 8.8 | 6.3 | 4.5 | 3.8 | 8.5 | 4.6 |
| Brightness between lamps (cd/m²) | 2560 | 2550 | 2540 | 2530 | 2540 | 2520 |

**[Table 3]**

| | Comparative Examples | | | | |
|---|---|---|---|---|---|
| | 1 | 2 | 3 | 4 | 5 |
| Base material PC (parts) | 100 | 100 | 100 | 100 | 100 |
| LD-1 (parts) | 0.4 | 0.4 | -- | -- | 0.6 |
| LD-2 (parts) | -- | -- | 1.5 | 3.0 | -- |
| Surface layer PC (parts) | 100 | 100 | 100 | 100 | 100 |
| Antistatic agent (parts) | 1.8 | 12 | 1.8 | 12 | 5.0 |
| PCL (parts) | -- | -- | -- | -- | 18 |
| Intrinsic surface resistance (Ω) | 6.3x10¹⁴ | 7.2x10¹² | 4.2x10¹⁴ | 7.5x10¹² | 5.2x10¹² |
| Half life (seconds) | 60< | 2.5 | 60< | 2.6 | 4.2 |
| Brightness between lamps (cd/m²) | 2540 | 2450 | 2530 | 2440 | 2430 |

As shown in Tables 1 and 2, the performance was adequate in all of the properties evaluated when the conditions of the present invention were satisfied (Examples 1-13).

On the other hand, some problems were encountered in all the cases when the conditions of the present invention were not satisfied.
• Comparative Example 1 is an example in which the amount of the antistatic agent used in the surface material did not fulfill the specified amount, and the results indicated a decline in the intrinsic surface resistance and half life properties.
• Comparative Example 2 is an example in which the amount of the antistatic agent used in the surface material exceeded the specified amount, and the results indicated that the color was poor and the target luminance was not realized.
• Comparative Example 3 is an example in which the light diffusing agent used in the base material in Comparative Example 1 was changed from LD-1 to LD-2. The results indicated a decline in the intrinsic surface resistance and half life properties since the amount of the antistatic agent used in the surface layer material did not satisfy the specified amount.
• Comparative Example 4 is an example in which the light diffusing agent used in the base material in Comparative Example 2 was changed from LD-1 to LD-2. The results indicated that the color was poor and a targeted luminance was not realized since the amount of the antistatic agent used in the surface layer material exceeded the specified amount.
• Comparative Example 5 is a case in which the amount of polycaprolactone used in the surface material exceeded the specified amount, and the results indicated that the clarity declined and a target luminance was not realized.

## Claims

1. A light diffusing polycarbonate resin sheet obtained by coextruding a polycarbonate resin composition containing an antistatic agent as a surface layer on at least one side of a base material comprising a polycarbonate resin composition containing a light diffusing agent, wherein said antistatic agent is an organic sulfonic acid phosphonium salt represented by the chemical formula 1 below 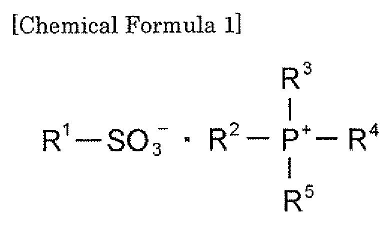 , wherein R¹ is an alkyl group, an aryl group or an aryl group containing alkyl groups as a substituent, and R² to R⁵ are, identical or different, hydrogen atoms, alkyl groups or aryl groups,
and the content of said antistatic agent exceeds 2.0 parts by weight but no more than 10 parts by weight per 100 parts by weight of the polycarbonate resin used in the surface layer.

2. The light diffusing polycarbonate resin sheet of claim 1, wherein the polycarbonate resin composition used in the surface layer further comprises polycaprolactone and the content of the polycaprolactone is 0.01 to 15 parts by weight per 100 parts by weight of the polycarbonate resin used in the surface layer.

3. The light diffusing polycarbonate resin sheet of claim 1 or 2, wherein the antistatic agent is an alkylbenzenesulfonic acid phosphonium salt represented by the chemical formula 2 below.

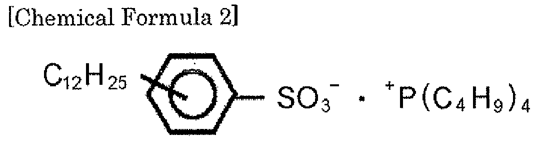

4. The light diffusing polycarbonate resin sheet of claim 1 or 2, wherein the content of the antistatic agent is 2.2 to 5 parts by weight per 100 parts by weight of the polycarbonate resin in the surface layer.

5. The light diffusing polycarbonate resin sheet of claim 2, wherein the content of the polycaprolactone is 0.1 to 7 parts by weight per 100 parts by weight of the polycarbonate resin used in the surface layer.
